# EUROPÄISCHE PATENTSCHRIFT

(11) **EP 2 450 578 B1**
(45) Veröffentlichungstag und Bekanntmachung des Hinweises auf die Patenterteilung: **18.05.2016**
(21) Anmeldenummer: 11186822.0
(22) Anmeldetag: 27.10.2011
(51) Int. Cl.: F15B 15/14

(54) **Pneumatikzylinder**
Pneumatic cylinder
Vérin pneumatique

(30) Priorität: 03.11.2010 DE 102010050398
(43) Veröffentlichungstag der Anmeldung: 09.05.2012
(73) Patentinhaber: ThyssenKrupp Marine Systems GmbH, 24143 Kiel (DE)
(72) Erfinder: Pantke, Marcel, 19348 Perleberg (DE); Nowoisky, Adrian, 24113 Molfsee (DE)
(74) Vertreter: ThyssenKrupp Intellectual Property GmbH

(56) Entgegenhaltungen:
- DE-A1- 10 139 769
- FR-A1- 2 623 865
- FR-A1- 2 759 947
- FR-A1- 2 920 493

## Beschreibung

Die Erfindung betrifft einen Pneumatikzylinder.

Der Einsatz von Pneumatikzylindern erweist sich in einer Flüssigkeitsumgebung und insbesondere in einem militärischen Unterseeboot außerhalb dessen Druckkörpers als problematisch. Gewöhnlich sind an Pneumatikzylindern die Durchführungen der Kolbenstangen durch die Zylinderwandung nicht druckdicht abgedichtet und/oder es sind an der Zylinderkammer, an der die Kolbenstange durch die Zyiinderwandung geführt ist, Entlüftungsöffnungen vorgesehen. Diese Ausgestaltungen des Pneumatikzylinders führen bei einer Verwendung eines solchen Zylinders in einer Flüssigkeit dazu, dass beim Rückhub des in dem Zylinder gelagerten Kolbens und der damit verbundenen Kolbenstange infolge eines dann in dieser Zylinderkammer entstehenden Unterdrucks durch die Durchführung der Kolbenstange und/oder durch die Entlüftungsöffnung Flüssigkeit in das Innere des Pneumatikzylinders angesaugt wird, die dann in das gesamte mit dem Pneumatikzylinder verbundene Druckluftsystem gelangen kann.

Um eine solche Flüssigkeitsaufnahme des Pneumatikzylinders zu verhindern, besteht grundsätzlich die Möglichkeit, die Kolbenstangendurchführung durch die Zylinderwandung luftdicht abzudichten und auf eine Entlüftungsöffnung zu verzichten. In diesem Fall besteht allerdings das Dilemma, dass die Zylinderkammer, an der die Kolbenstangendurchführung ausgebildet ist, wie eine Gasfeder wirkt und der Kolben mit der daran befestigten Kolbenstange wegen des in der Zylinderkammer verbleibenden Luftpolsters gegebenenfalls nicht mehr in eine gewünschte Endlage ausgefahren werden kann, oder die Abdichtung der Kolbenstangendurchführung aufgrund der Luftkompression in dieser Luftkammer schließlich auch undicht wird und somit wieder ein Ansaugen der Flüssigkeit in das Druckluftsystem ermöglicht. Bei Einsatz eines solchen Pneumatikzylinders in einem militärischen Unterseeboot ist es zudem von Nachteil, dass die über die Abdichtung der Kolbenstangendurchführung in das Umgebungswasser entweichende Luft zu Ausströmgeräuschen führt, die bei einem solchen Unterseeboot nach Möglichkeit zu vermeiden sind.

Ein aus DE 101 39 769 A1 bekannter einfach wirkender Pneumatikzylinder weist einen in einem Zylinder beweglich geführten Kolben auf. An dem Kolben, welcher als Hohlkolben ausgebildet ist und druckdicht, durch die Zylinderwandung geführt ist, ist eine Kolbenstange angeordnet. Der Kolben teilt den Zylinder in eine mit einem Druckgas beaufschlagbare erste Zylinderkammer und eine ringförmig um einen Abschnitt des Kolbens angeordnete zweite Zylinderkammer, wobei die erste und die zweite Zylinderkammer über eine an dem Kolben ausgebildete Bohrung miteinander in Verbindung stehen. Durch Druckbeaufschlagung der ersten Zylinderkammer ist der Kolben aus dem Zylinder herausfahrbar. Ein in der zweiten Zylinderkammer angeordnete Rückstellfeder ermöglicht eine Rückbewegung des Kolbens in den Zylinder.

Vor diesem Hintergrund liegt der Erfindung die Aufgabe zugrunde, einen Pneumatikzylinder zu schaffen, der zum Einsatz in einer Flüssigkeitsumgebung geeignet ist und der die oben beschriebenen Nachteile nicht aufweist.

Gelöst wird diese Aufgabe durch einen Pneumatikzylinder mit den in Anspruch 1 angegebenen Merkmalen. Vorteilhafte Weiterbildungen dieses Pneumatikzylinders ergeben sich aus den Unteransprüchen, der nachfolgenden Beschreibung sowie der Zeichnung. Hierbei können gemäß der Erfindung die in den Unteransprüchen angegebenen Merkmale jeweils für sich aber auch in technisch sinnvoller Kombination die erfindungsgemäße Lösung gemäß Anspruch 1 weiter ausgestalten.

Der erfindungsgemäße Pneumatikzylinder weist in üblicher Weise einen Zylinder und einen in dem Zylinder beweglich geführten Kolben auf. Der Kolben teilt den Zylinderinnenraum in eine erste und eine zweite Zylinderkammer. Die erste Zylinderkammer ist mit einem Druckgas beaufschlagbar. Dementsprechend ist an dem Zylinder ein in der ersten Zylinderkammer mündender Drückgasanschluss angeordnet, der an ein Druckgassystem und vorzugsweise an ein Druckluftsystem anschließbar ist. An dem Kolben ist eine durch die zweite Zylinderkammer und aus dem Zylinder ausfahrbare Kolbenstange angeordnet.

Die zweite Zylinderkammer ist gegenüber der Außenumgebung des Zylinders druckdicht abgedichtet. D.h., an der Kolbenstangendurchführung durch die Zylinderwandung ist eine Dichtung angeordnet, die verhindert, dass über die Kolbenstangendurchführung Gas bzw. Luft aus der zweiten Zylinderkammer in die Außenumgebung des Pneumatikzylinders entweichen kann. Darüber hinaus weist die zweite Zylinderkammer keine Entlüftungsöffnung auf.

Um sicherzustellen, dass bei einer Ausfahrbewegung des Kolbens bzw. der damit verbundenen Kolbenstange auf der die Kolbenstangendurchführung abdichtenden Dichtung kein unzulässig hoher Druck wirkt, ist gemäß der Erfindung vorgesehen, dass die beiden Zylinderkammern miteinander strömungsverbunden sind. Demnach besteht zwischen den beiden Zylinderkammern eine Überströmrnöglichkeit, die verhindert, dass das in der zweiten Zylinderkammer befindliche Gas bzw. die darin befindliche Luft durch die Ausfahrbewegung des Kolbens komprimiert wird, da über die Strömungsverbindung zu der ersten Zylinderkammer ein Druckausgleich stattfindet. Auf diese Weise können ansonsten aufgrund zu hoher Druckbeanspruchung auftretende Druckverluste über die Dichtung der Kolbenstangendurchführung und ein damit einhergehender Unterdruck in der zweiten Zylinderkammer beim Rückhub des Kolbens vermieden werden.

Die Strömungsverbindung von erster und zweiter Zylinderkammer kann mittels einer oder mehrerer Überströmleitungen realisiert werden, die außerhalb des Zylinders angeordnet sind und jeweils in der ersten und der zweiten Zylinderkammer münden. Eine kompaktere Ausgestaltung des erfindungsgemäßen Pneumatikzylinders lässt sich aber dann verwirklichen, wenn, wie es bevorzugt vorgesehen ist, der Kolben mindestens eine Durchbrechung aufweist, welche die beiden Zylinderkammern strömungsverbindet. Dementsprechend erstreckt sich bei dieser Ausgestaltung mindestens ein Kanal vorzugsweise parallel zur Mittelachse des Kolbens vollständig durch den Kolben.

Erfindungsgemäß weist der Pneumatikzylinder mindestens ein entgegen der Ausfahrrichtung der Kolbenstange wirkendes Federelement auf. Demnach ist der erfindungsgemäße Pneumatikzylinder als ein einfachwirkender Zylinder ausgebildet, bei dem der Ausfahrhub in Folge einer Druckgasbeaufschlagung des Kolbens mit gleichzeitiger Spannung des Federelementes erfolgt und der Rückhub bzw. die Einfahrbewegung der Kolbenstange nach Ende der Gas- bzw. Druckbeaufschlagung des Kolbens durch Entspannung des Federelements erfolgt.

Das zumindest eine Federelement ist außerhalb des Zylinders angeordnet. Beispielsweise kann das Federelement eine Schraubenfeder sein, die um den Zylinder herum angeordnet ist, so dass der Zylinder in das Innere der Feder eingreift. Diese Ausgestaltung ermöglicht eine vergleichsweise kompakte Ausgestaltung des Pneumatikzylinders. Vorteilhaft können aber auch ein oder mehrere Federelemente neben dem Zylinder angeordnet sein.

Das Federelement ist bevorzugt eine Druckfeder. Diese Druckfeder ist zweckmäßigerweise derart angeordnet, dass sie direkt oder indirekt von dem Kolben oder der Kolbenstange bei einer Ausfahrbewegung des Kolbens und der Kolbenstange gespannt wird und sich nach Ende einer Gas- bzw. Druckluftbeaufschlagung des Kolbens entspannt und auf diese Weise einen Rückhub des Kolbens und der damit verbundenen Kolbenstange verursacht.

Weiter bevorzugt ist die Druckfeder mittels einer mit der Kolbenstange bewegungsgekoppelten Zugstange vorgespannt. Mit der Zugstange wird die Druckfeder vorteilhafterweise so verspannt, dass sie auch dann, wenn der Kolben nicht mit Druckgas bzw. Druckluft beaufschlagt ist, vorgespannt ist und so den Kolben und die Kolbenstange in deren in dem Zylinder eingefahrenen Zustand sicher in einer Endposition hält. Aufgrund der Bewegungskopplung der Zugstange mit der Kolbenstange wird die Druckfeder über die Zugstange bei einer Ausfahrbewegung der Kolbenstange aus dem Zylinder weiter auf Druck beansprucht, wodurch innerhalb der Druckfeder das für den Rückhub des Kolbens und der Kolbenstange erforderliche Arbeitspotential erzeugt wird. Vorzugsweise handelt es sich bei der Druckfeder um eine Schraubenfeder, bei der die Zugstange durch das Innere, d.h. durch den von dem Wendelgang der Schraubenfeder umschlossenen Freiraum geführt ist. Zweckmäßigerweise sind die Druckfeder und die Zugstange neben dem Zylinder angeordnet.

Bei Anordnung der Druckfeder außerhalb des Zylinders kann die Druckfeder vorteilhaft zwischen einem das in Ausfahrrichtung der Kolbenstange verschließenden Deckel und einer auf der äußeren Mantelfläche des Zylinders beweglich gelagerten Gleitbuchse mittels der Zugstange verspannt sein. An dem Deckel ist die Druckfeder starr festgelegt. Bei einer mit der Ausfahrbewegung der Kolbenstange einhergehenden Bewegung der Zugstange wird die mit der Zugstange bewegungsgekoppelte Gleitbuchse in Ausfahrrichtung der Kolbenstange auf dem Zylinder verschoben, wodurch die Druckfeder gegen den Deckel weiter gespannt wird und so das für den Rückhub von Kolben und Kolbenstange erforderliche Arbeitspotential speichert.

Bevorzugt wird der Bewegungsweg der Gleitbuchse in Ausfahrrichtung der Kolbenstange von einem Anschlag begrenzt. Dieser Anschlag ist zweckmäßigerweise außenseitig der äußeren Mantelfläche des Zylinders ausgebildet und derart angeordnet, dass der Gleitweg der Gleitbuchse mit dem erforderlichen Ausfahrweg der Kolbenstange aus dem Zylinder korrespondiert.

Der erfindungsgemäße Pneumatikzylinder kann vorteilhaft in einem Unterseeboot und dort vorzugsweise außerhalb des Druckkörpers eingesetzt werden. Ein solches Unterseeboot bildet auch Teil der Erfindung. Dieses Unterseeboot weist mindestens einen Pneumatikzylinder mit den oben beschriebenen Merkmalen und Vorteilen auf. In dem Unterseeboot kann der Pneumatikzylinder beispielsweise zum Betätigen eines Ventils verwendet werden, das in dem wasserdurchfluteten Raum zwischen dem Druckkörper und einer den Druckkörper umgebenden Auβenhaut angeordnet ist. Dieses Ventil kann direkt mittels der Kolbenstange des Pneumatikzylinders, der an ein Druckluftsystem des Unterseeboots angeschlossen ist, oder mittels eines mit der Kolbenstange bewegungsgekoppelten Aktors betätigt, z.B. geöffnet und geschlossen werden.

Nachfolgend ist die Erfindung anhand von in der Zeichnung dargestellten Ausführungsbeispielen näher erläutert. In der Zeichnung zeigt:
- Fig. 1: einen Pneumatikzylinder in perspektivischer Darstellung ,
- Fig. 2: den Pneumatikzylinder gemäß Fig. 1 in einem Längsschnitt,
- Fig. 3: den Zylinder des Pneumatikzylinder gemäß Fig. 1 in einer vergrößerten Schnittansicht,
- Fig. 4: vergrößert eine Einzelheit A aus Fig. 3,
- Fig. 5: vergrößert eine Einzelheit B aus Fig. 3 und
- Fig. 6: geschnitten einen Zylinder eines Pneumatikzylinders gemäß einer nicht zur Erfindung gehörenden Ausgestaltung.

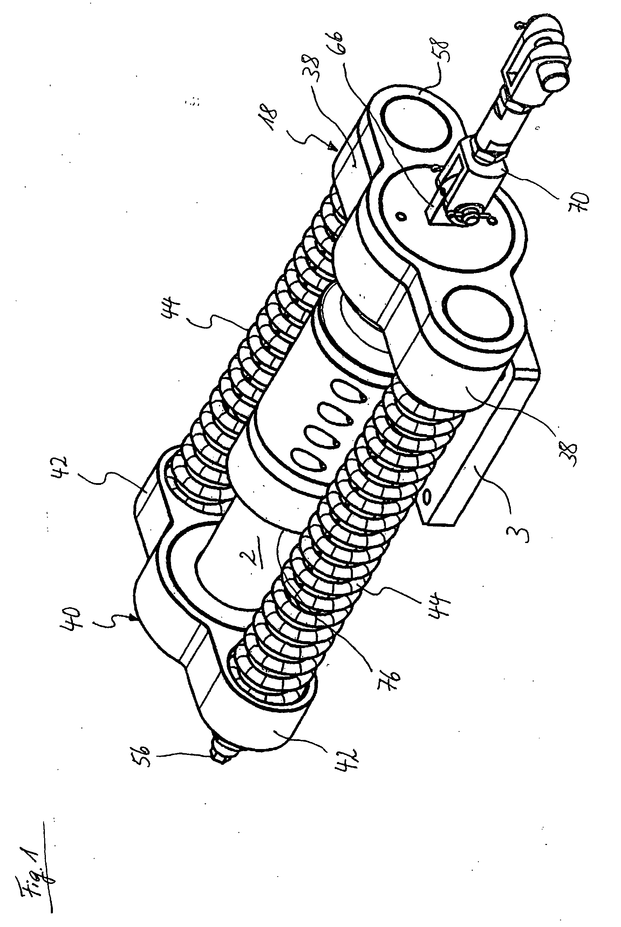

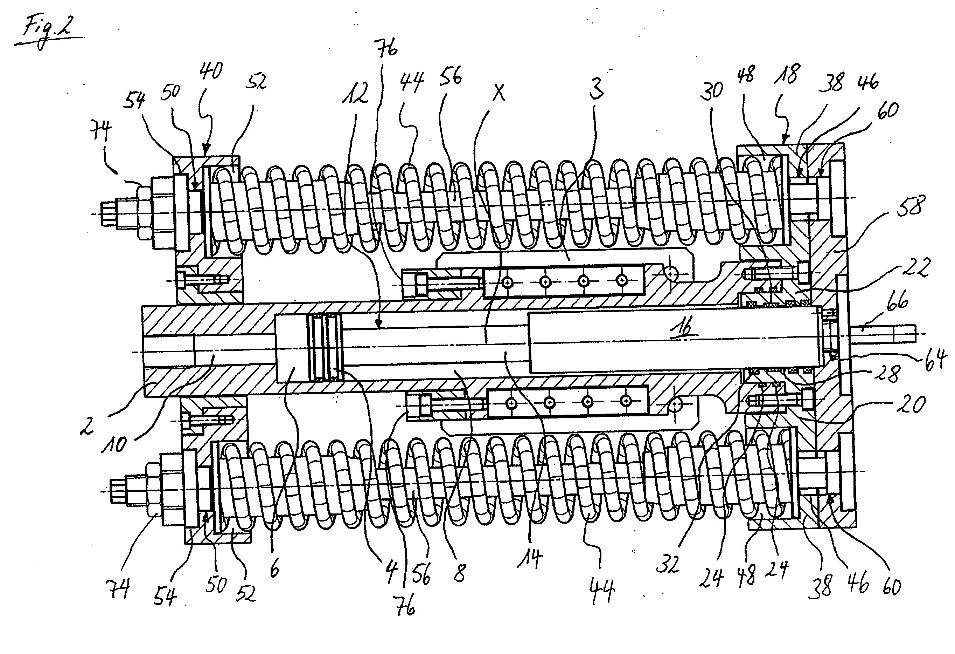

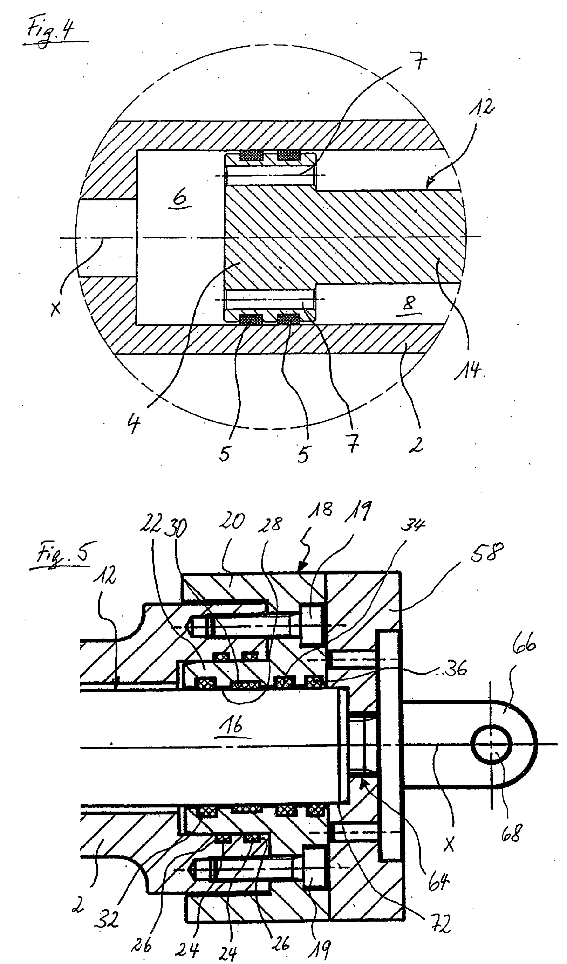

Der in den Fig. 1 bis 5 dargestellte Pneumatikzylinder weist einen Zylinder 2 auf. Zur Lagerung des Pneumatikzylinders ist an dem Zylinder 2 ein Lagerfuß 3 befestigt. In dem Zylinder 2 ist ein Kolben 4 entlang einer Längsachse X des Zylinders 2 beweglich geführt. Hierzu sind an der äuβeren Mantelfläche des Kolbens 4 in Längsrichtung des Kolbens 4 hintereinander zwei Ringnuten ausgebildet, die jeweils zur Aufnahme eines Gleitlagerrings 5 dienen (Fig. 4).

Der Kolben 4 teilt den Zylinderinnenraum in eine erste Zylinderkammer 6 und eine zweite Zylinderkammer 8. An der Zylinderkammer 6 mündet eine aus dem Zylinder 2 führende Bohrung 10, an die eine Druckluftleitung anschließbar ist. Die Bohrung 10 ist konzentrisch zur Längsachse X des Zylinders 2 ausgerichtet. Um während der Ausfahrhubs des Kolbens 4 einen Druckausgleich zwischen der Zylinderkammer 6 und der Zylinderkammer 8 herzustellen, sind an dem Kolben 4 jeweils um 90° versetzt vier Durchbrechungen 7 ausgebildet, die jeweils eine Strömungsverbindung zwischen den Zylinderkammern 6 und 8 schaffen (Fig. 4).

An der der Zylinderkammer 8 zugewandten Seite ist an dem Kolben 4 eine Kolbenstange 12 angeordnet. Die Kolbenstange 12 gliedert sich hauptsächlich in zwei Kolbenstangenabschnitte 14 und 16, wobei der Querschnitt des Kolbenstangenabschnitts 16 größer als derjenige des Kolbenstangenabschnitts 14 ist.

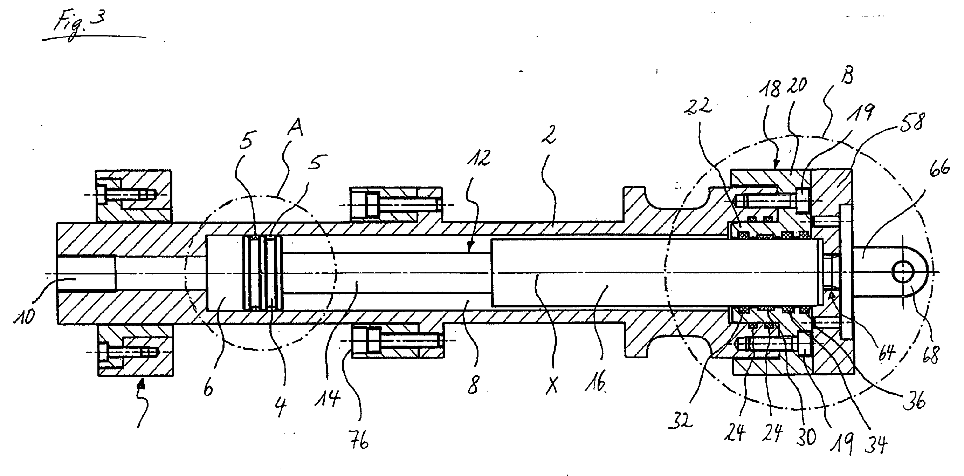

Das von der Bohrung 10 abgewandte Ende des Zylinders 2 wird von einem Deckel 18 verschlossen. In den Fig. 3 und 5 ist der Deckel 18 nur teilweise dargestellt. Der Deckel 18 ist derart ausgebildet, dass ein Abschnitt 20 den Außenrand des Zylinders 2 in Richtung dessen Längsachse X umgreift. Mittels Schrauben 19, die den Deckel 18 parallel zu dessen Mittelachse durchgreifen und in dem Deckel 18 versenkt angeordnet sind, ist der Deckel 18 an dem Zylinder 2 befestigt.

Zentral weist der Deckel 18 einen konzentrisch zu dessen Mittelachse ausgerichteten Vorsprung 22 auf. Dieser Vorsprung 22 greift in das von der Bohrung 10 abgewandte Ende des Zylinders 2 ein. An diesem Ende ist das Innenlumen des Zylinders 2 absatzförmig erweitert. Gegenüber der Innenwandung des Zylinders 2 ist der Vorsprung 22 mit zwei O-Ringen 24 von innen nach außen und umgekehrt abgedichtet. Die O-Ringe 24 sind in zwei Ringnuten 26 angeordnet, die an der Innenwandung des Zylinders 2 in dessen erweitertem Endbereich in Richtung der Längsachse X hintereinander ausgebildet sind (Fig. 5).

In Richtung seiner Längsausdehnung weist der Vorsprung 22 eine zentrale Durchbrechung 28 auf. Durch diese Durchbrechung 28 ist die Kolbenstange 12 aus dem Zylinder 2 ausfahrbar. Der Querschnitt der Durchbrechung 28 korrespondiert im Wesentlichen mit dem Querschnitt des Kolbenstangenabschnitts 16. In der Durchbrechung 28 ist der Kolbenstangenabschnitt 16 auf einem Gleiflagerring 30 verschiebbar gelagert. Der Gleitlagerring 30 ist in einer Ringnut angeordnet, die an der die Durchbrechung 28 begrenzenden Innenwandung ausgebildet ist.

In Ausfahrrichtung der Kolbenstange 12 hinter dem Gleitlagerring 30 ist in der die Durchbrechung 28 begrenzenden lnnenwandung eine weitere Ringnut eingearbeitet, die einen Dichtring 32 aufnimmt. Der Dichtring 32 dichtet die Zylinderkammer 8 luftdicht gegen die Außenumgebung des Zylinders 2 ab, so dass keine Luft aus der Zylinderkammer 8 in die Außenumgebung des Zylinders 2 entweichen kann. In Ausfahrrichtung der Kolbenstange 12 vor dem Gleitlagerring 30 sind in der die Durchbrechung 28 begrenzenden Innenwandung hintereinander zwei weitere Ringnuten eingearbeitet, wobei in der direkt neben dem Gleitlagerring 30 angeordneten Ringnut ein Dichtring 34 angeordnet ist, der die Zylinderkammer gegen einen auf den Zylinder 2 wirkenden Außendruck abdichtet. In der in Ausfahrrichtung der Kolbenstange 12 vor dem Dichtring 34 angeordneten Ringnut ist ein Abstreifring 36 angeordnet, der verhindert, dass sich bei ausgefahrener Kolbenstange 12 an dem Kolbenstangenabschnitt 16 abgelagerte Verunreinigungen beim Rückhub der Kolbenstange 12 in die Durchbrechung 28 gelangen können.

An dem den Zylinder 2 verschließenden Deckel 18 sind einander diametral gegenüberliegend zwei radiale Erweiterungen 38 ausgebildet. Im Bereich des von dem Deckel 18 abgewandten Endes des Zylinders 2 ist auf diesem eine Gleitbuchse 40 verschiebbar gelagert. Auch die Gleitbuchse 40 ist in Fig. 3 aus Übersichtlichkeitsgründen nur teilweise dargestellt. Korrespondierend zu den radialen Erweiterungen 38 des Deckels 18 weist die Gleitbuchse 40 einander diametral gegenüberliegend zwei radiale Erweiterungen 42 auf. Zwischen der Gleitbuchse 40 und dem Deckel 18 stützen sich zwei Federelemente in Form von Schraubenfedern 44 ab, d.h., jeweils zwischen einer Erweiterung 38 des Deckels 18 und einer Erweiterung der Gleitbuchse 40 stützt sich eine Schraubenfeder 44 ab.

An den Erweiterungen 38 des Deckels 18 ist jeweils eine parallel zur Längsachse X des Zylinders 2 ausgerichtete Bohrung 46 ausgebildet. Jede dieser Bohrungen 46 ist als eine Stufenbohrung ausgebildet und weist einen erweiterten Absatz 48 auf, der an der der Gleitbuchse 40 zugewandten Seite der Erweiterungen 38 ausgebildet ist. An den Erweiterungen 42 der Gleitbuchse 40 sind Bohrungen 50 ausgebildet, die sich ebenfalls parallel zur Längsachse X des Zylinders 2 erstrecken. Die Bohrungen 50 sind auch als Stufenbohrungen ausgebildet, wobei sie an der dem Deckel 18 zugewandten Seite der Erweiterungen 42 einen erweiterten Absatz 52 und an der davon abgewandten Seite einen Absatz 54 aufweisen. Der Durchmesser des Absatzes 52 korespondiert mit dem Absatz 48 der Erweiterungen 38 des Deckels 18 und korrespondiert mit dem Außendurchmesser der Schraubenfedern 44, die in die Absätze 48 und 52 eingreifen.

Zwischen den Erweiterungen 38 des Deckels 18 und den Erweiterungen 42 der Gleitbuchse 40 sind die Schraubenfedern 44 mittels Zugstangen 56 und einer Zugplatte 58 verspannt. Die Zugplatte 58 ist an der Außenseite des Deckels 18 angeordnet. Auch die Zugplatte 58 ist in den Fig. 3 und 5 nur teilweise dargestellt. Die Querschnittsform der Zugplatte 58 entspricht der Querschnittsform des Deckels 18. Die Zugplatte 58 ist mit der Kolbenstange 12 bewegungsgekoppelt und wird bei einer Ausfahrbewegung der Kolbenstange 12 von dem Deckel 18 weg bewegt.

Korrespondierend zu der Position der Bohrungen 46 an den Erweiterungen 38 des Deckels 18 sind an der Zugplatte 58 zwei Bohrungen 60 ausgebildet. Auch die Bohrungen 60 sind als Stufenbohrungen ausgebildet und weisen an der von dem Deckel 18 abgewandten Seite einen erweiterten Absatz 62 auf.

Darüber hinaus ist an der Zugplatte 58 eine weitere Bohrung 64 ausgebildet, deren Mittelachse auf der Längsachse X des Zylinders 2 liegt. Durch die Bohrung 64 ist ein dritter Abschnitt 66 der Kolbenstange 12, der sich an den Kolbenstangenabschnitt 16 in Ausfahrrichtung der Kolbenstange 12 anschließt, geführt. An dem von dem Kolbenstangenabschnitt 16 abgewandten Ende des Abschnitts 66 der Kolbenstange 12 ist ein Auge 68 ausgebildet, das zum Befestigen eines Aktors 70 dient, welcher zum Betätigen eines Ventils vorgesehen ist. An der dem Deckel 18 zugewandten Seite der Zugplatte 58 weist die Bohrung einen Absatz 72 mit einem erweiterten Durchmesser auf An diesem Absatz 72 stützt sich der Kolbenstangenabschnitt 16 ab.

Die Zugstangen 56 sind durch die Schraubenfedern 44 geführt, wobei jeweils ein Endabschnitt der Zugstangen 56 durch die an der Gleitbuchse 40 ausgebildete Bohrung 50 und ein Endabschnitt der Zugstange 56 durch die an der Erweiterung 38 des Deckels 18 ausgebildete Bohrung 46 sowie durch die an der Zugplatte 58 ausgebildete Bohrung 60 geführt ist. Außenseitige der Gleitbuchse 40 und außenseitig der Zugplatte 58 sind die Zugstangen 56 verspannt, wobei mittels Verschraubungen 74 an den aus der Gleitbuchse 40 herausragenden Endabschnitten der Zugstangen 56 die Vorspannung der Schraubenfedern 44 einstellbar ist. Die Gleitbuchse 40 wird bei einer Ausfahrbewegung des Kolbens 4 und der daran angeordneten Kolbenstange 12 in Ausfahrrichtung des Kolbens 4 bzw. der Kolbenstange 12 bis zum Erreichen eines Anschlags 76 mitbewegt.

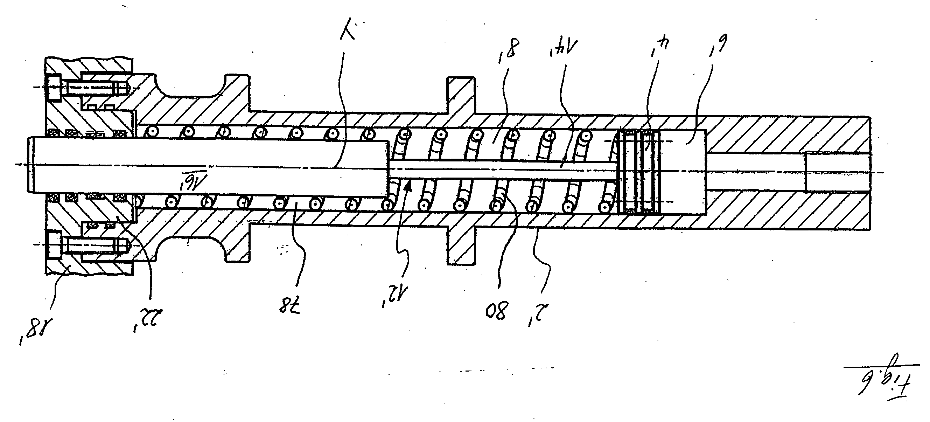

Der in Fig. 6 dargestellte Pneumatikzylinder weist einen Zylinder 2' auf, in dem ein Kolben 4' entlang einer Längsachse Y des Zylinders 2' beweglich geführt. Auch der Kolben 4' teilt den Zylinderinnenraum in eine erste Zylinderkammer 6' und eine zweite Zylinderkammer 8'. Um während der Ausfahrhubs des Kolbens 4' einen Druckausgleich zwischen der Zylinderkammer 6' und der Zylinderkammer 8' herzustellen, sind auch an dem Kolben 4' jeweils um 90° versetzt vier Durchbrechungen ausgebildet, die jeweils eine Strömungsverbindung zwischen den Zylinderkammern 6' und 8' schaffen.

An der der Zylinderkammer 8' zugewandten Seite ist an dem Kolben 4' eine Kolbenstange 12' angeordnet, die aus zwei hintereinander angeordneten Kolbenstangenabschnitten 14' und 16' besteht. Der Querschnitt des Kolbenstangenabschnitts 16' ist größer als derjenige des Kolbenstangenabschnitts 14' aber kleiner als der Innendurchmesser des Zylinders 2' sodass der Kolbenstangenabschnitt 16' von einem freien Ringspalt 78 umgeben ist.

Das an die Zylinderkammer 8' angrenzende Ende des Zylinders 2' wird von einem Deckel 18' verschlossen. Auch der Deckel 18' weist zentral einen konzentrisch zu dessen Mittelachse ausgerichteten Vorsprung 22' auf. Dieser Vorsprung 22' greift in das an die Zylinderkammer 8' angrenzende Ende des Zylinders 2' ein.

In der Zylinderkammer 8' ist eine Schraubenfeder 80 angeordnet, die die Kolbenstange 12' umgibt. Die Schraubenfeder 80 stützt sich unter Vorspannung zwischen der dem Deckel 18' zugewandten Seite des Kolbens 4' und dem in die Zylinderkammer 8' eingreifenden Vorsprung 22' des Deckels 18' ab. Bei einem Ausfahrhub des Kolbens 4' und der daran angeordneten Kolbenstange 12' aufgrund einer Druckluftbeaufschlagung der Zylinderkammer 6' wird die Schraubenfeder 80 in der Zylinderkammer 8' komprimiert. Nach dem Ende der Druckluftbeaufschlagung der Zylinderkammer 6' entspannt sich die Schraubenfeder 80 wieder und bedingt auf diese Weise einen Rückhub des Kolbens 4' und der Kolbstange 12' in die Ausgangsposition.

### Bezugszeichenliste

- 2, 2': - Zylinder
- 3: - Lagerfuß
- 4, 4': - Kolben
- 5: - Gleitlagerring
- 6, 6': - Zylinderkammer
- 7: - Durchbrechung
- 8, 8': - Zylinderkammer
- 10: - Bohrung
- 12, 12': - Kolbenstange
- 14, 14': - Kolbenstangenabschnitt
- 16, 16': - Kolbenstangenabschnitt
- 18, 18': - Deckel
- 19: - Schraube
- 20: - Abschnitt
- 22, 22': - Vorsprung
- 24: - O-Ring
- 26: - Ringnut
- 28: - Durchbrechung
- 30: - Gleitlagerring
- 32: - Dichtring
- 34: - Dichtring
- 36: - Abstreifring
- 38: - Erweiterung
- 40: - Gleitbuchse
- 42: - Erweiterung
- 44: - Schraubenfeder
- 46: - Bohrung
- 48: - Absatz
- 50: - Bohrung
- 52: - Absatz
- 54: - Absatz
- 56: - Zugstange
- 58: - Zugplatte
- 60: - Bohrung
- 62: - Absatz
- 64: - Bohrung
- 66: - Abschnitt
- 68: - Auge
- 70: - Aktor
- 72: - Absatz
- 74: - Verschraubung
- 76: - Anschlag
- 78: - Ringspalt
- 80: - Schraubenfeder

- A: - Einzelheit
- B: - Einzelheit
- X: - Längsachse
- Y: - Längsachse

## Patentansprüche

1. Pneumatikzylinder mit einem Zylinder (2, 2') und mit einem in dem Zylinder (2, 2') bewegbar geführten Kolben (4, 4'), welcher den Zylinderinnenraum in eine erste (6, 6') und eine zweite Zylinderkammer (8, 8') teilt und an welchem eine durch die zweite Zylinderkammer (8, 8') und aus dem Zylinder (2, 2') ausfahrbare Kolbenstange (12, 12') angeordnet ist, wobei die erste Zylinderkammer (6, 6') Druckgas beaufschlagbar ist und die zweite Zylinderkammer (8, 8') druckdicht gegenüber der Außenumgebung des Zylinders (2, 2') abgedichtet ist und wobei die beiden Zylinderkammern (6, 6', 8, 8') miteinander strömungsverbunden sind, **dadurch gekennzeichnet, dass** der Pneumatikzylinder mindestens ein entgegen der Ausfahrrichtung der Kolbenstange (12, 12') wirkendes, außerhalb des Zylinders (2) angeordnetes Federelement aufweist.

2. Pneumatikzylinder nach Anspruch 1, bei dem der Kolben (4, 4') mindestens eine Durchbrechung (7) aufweist, welche die Zylinderkammern (6, 6', 8, 8') strömungsverbindet.

3. Pneumatikzylinder nach einem der vorangehenden Ansprüche, bei dem das Federelement eine Druckfeder ist, welche mittels einer mit der Kolbenstange (12) bewegungsgekoppelten Zugstange (56) vorgespannt ist.

4. Pneumatikzylinder nach Anspruch 3, bei dem die Druckfeder zwischen einem das in Ausfahrrichtung der Kolbenstange (12) verschließenden Deckel (18) und einer auf der äußeren Mantelfläche des Zylinders (2) beweglich gelagerten Gleitbuchse (40) mittels der Zugstange (56) verspannt ist.

5. Pneumatikzylinder nach Anspruch 4, bei dem der Bewegungsweg der Gleitbuchse (40) in Ausfahrrichtung der Kolbenstange (12) von einem Anschlag (76) begrenzt wird.

6. Unterseeboot mit mindestens einem außerhalb des Druckkörpers angeordneten Pneumatikzylinder nach einem der Ansprüche 1 bis 5.

## Claims

1. Pneumatic cylinder having a cylinder (2, 2') and having a piston (4, 4') which is guided movably in the cylinder (2, 2'), divides the cylinder interior into a first (6, 6') and a second cylinder chamber (8, 8'), and on which a piston rod (12, 12') which can be extended through the second cylinder chamber (8, 8') and out of the cylinder (2, 2') is arranged, it being possible for the first cylinder chamber (6, 6') to be loaded with compressed gas, and the second cylinder chamber (8, 8') being sealed in a pressure-tight manner with respect to the external surroundings of the cylinder (2, 2'), and the two cylinder chambers (6, 6', 8, 8') being flow-connected to one another, **characterized in that** the pneumatic cylinder has at least one spring element which acts counter to the extension direction of the piston rod (12, 12') and is arranged outside the cylinder (2).

2. Pneumatic cylinder according to claim 1, in which the piston (4, 4') has at least one aperture (7) which flow-connects the cylinder chambers (6, 6', 8, 8').

3. Pneumatic cylinder according to either of the preceding claims, in which the spring element is a compression spring which is prestressed by means of a tie rod (56) which is coupled in terms of movement to the piston rod (12).

4. Pneumatic cylinder according to claim 3, in which the compression spring is clamped by means of the tie rod (56) between a cover (18) which closes in the extension direction of the piston rod (12) and a sliding bush (40) which is mounted movably on the outer lateral face of the cylinder (2).

5. Pneumatic cylinder according to claim 4, in which the movement travel of the sliding bush (40) in the extension direction of the piston rod (12) is limited by a stop (76).

6. Submarine having at least one pneumatic cylinder according to one of claims 1 to 5 which is arranged outside the pressure hull.

## Revendications

1. Vérin pneumatique comprenant un vérin (2, 2') et un piston (4, 4') guidé de manière déplaçable dans le vérin (2, 2') qui divise l'espace intérieur du vérin en une première chambre (6, 6') et une deuxième chambre (8, 8') de vérin et au niveau duquel est disposée une tige de piston (12, 12') pouvant être sortie à travers la deuxième chambre de vérin (8, 8') et hors du vérin (2, 2'), la première chambre de vérin (6, 6') pouvant être sollicitée par du gaz sous pression et la deuxième chambre de vérin (8, 8') étant étanchéifiée de manière étanche à la pression vis-à-vis de l'environnement extérieur du vérin (2, 2') et les deux chambres de vérin (6, 6', 8, 8') étant en liaison fluidique l'une avec l'autre, **caractérisé en ce que** le vérin pneumatique présente au moins un élément de ressort agissant à l'encontre de la direction de sortie de la tige de piston (12, 12') et disposé à l'extérieur du vérin (2).

2. Vérin pneumatique selon la revendication 1, dans lequel le piston (4, 4') présente au moins un orifice (7) qui relie fluidiquement les chambres de vérin (6, 6', 8, 8').

3. Vérin pneumatique selon l'une quelconque des revendications précédentes, dans lequel l'élément de ressort est un ressort de compression qui est précontraint au moyen d'une tige de traction (56) accouplée de manière déplaçable à la tige de piston (12).

4. Vérin pneumatique selon la revendication 3, dans lequel le ressort de compression est précontraint au moyen de la tige de traction (56) entre un couvercle (18) fermant la tige de piston (12) dans la direction de sortie et un manchon coulissant (40) supporté de manière déplaçable sur la surface d'enveloppe extérieure du vérin (2).

5. Vérin pneumatique selon la revendication 4, dans lequel la course de déplacement du manchon coulissant (40) dans la direction de sortie de la tige de piston (12) est limitée par une butée (76).

6. Sous-marin comprenant au moins un vérin pneumatique selon l'une quelconque des revendications 1 à 5, disposé à l'extérieur du corps de pression.
